# EUROPÄISCHE PATENTANMELDUNG

(11) **EP 0 869 667 A2**
(43) Veröffentlichungstag der Anmeldung: **07.10.1998**
(21) Anmeldenummer: 97116611.1
(22) Anmeldetag: 24.09.1997
(51) Int. Cl.: H04N 5/225

(54) **Wischervorrichtung**

(30) Priorität: 24.09.1996 DE 29616586 U
(71) Anmelder: Lederer, Karlheinz, 93161 Sinzing (DE)
(72) Erfinder: Lederer, Karlheinz, 93161 Sinzing (DE)

(57) **Zusammenfassung**

Die Wischervorrichtung ist zur Verwendung an einem Fenster (2) eines Schutzgehäuses einer Videokamera vorgesehen und besteht aus einem geradlinig, vorzugsweise in vertikaler Richtung bewegten, an einem Wischerträger (9) befestigten Wischerblatt (10 a). Die Bewegungsübertragung erfolgt von einem Getriebemotor (11,12) über ein bandartiges Antriebselement (8), welches über zwei Umlenkrollen (7) geführt ist. Während des Wischhubes wird das Wischerblatt (10 a) entlang des Fensters (2) bewegt, während es beim Rückhub von dem Antriebselement (8) in einem großen Abstand zum Fenster (2) zurückgefahren wird. Als Antriebselement eignen sich vor allem Gliederketten sehr gut, die formschlüssig von Kettenrädern geführt sind.

Die Führung des Wischerträgers (9) erfolgt bei breiteren Fenstern (2) vorzugsweise an beiden Enden durch zwei getrennte, synchron betätigte Antriebssysteme. Zur Verbesserung der Reinigungwirkung und zur Verkürzung der Reinigungsdauer läßt sich die Wischervorrichtung auch mit zwei oder mehr an je einem Wischerträger (9) befestigten Wischerblättern (10a) ausrüsten.

## Beschreibung

Die Erfindung betrifft eine Wischervorrichtung gemäß dem Oberbegriff des ersten Patentanspruches.

Videokameras, die im Freien eingesetzt werden sollen, sind in Schutzgehäusen mit einem Fenster eingebaut, durch das die Sicht auf das zu filmende Objekt freigegeben wird. Solche Kameras werden seit kurzem z.B. zum Schutz von Lagerflächen, Fabrikationseinrichtungen u.ä. auf den umgebenden Mauern oder Zäunen angeordnet und ermöglichen eine stichprobenhafte oder kontinuierliche Überwachung eines bestimmten Abschnittes. Auch auf den Mauern von Haftanstalten ist ihr Einsatz denkbar. Damit eine vom Wetter unabhängige Überwachung möglich ist, muß die Kamera auch bei Regen und Schneefall einwandfrei arbeiten können. Dazu ist das Fenster des Schutzgehäuses von Schmutz und Feuchtigkeit freizuhalten.

Zur Reinigung der Fenster von Straßen- und Schienenfahrseugen sind um einen Drehpunkt schwenkbare Scheibenwischer bekannt. Sie überstreichen dabei in einer Hin- und Herbewegung eine Sektorfläche der Scheibe. Sie bestehen aus einem von einer motorisch angetriebenen Welle betätigten Wischerarm und einem daran befestigten Wischerblatt, welches bei beiden Bewegungsrichtungen auf dem Fenster aufliegt. Da die bekannten Wischervorrichtungen nur jeweils eine sektorförmige Fläche bestreichen, ist mit ihnen die Reinigung einer rechteckigen Fensterfläche nicht durchführbar. Eine Verbessserung läßt sich mit einer Anordnung erreichen, bei der zwei der bekannten Wischervorrichtungen mit sich teilweise überdeckenden Sektorflächen und gegenläufig angetriebenen Wischerblättern zusammenwirken.

Während das erste Wischerblatt an seinem unteren Hubende eine in etwa horizontale Endstellung einnimmt, hat das zweite Blatt an seinem oberen Hubende eine etwa vertikale Endstellung erreicht. Nach einem weiteren Hub kehren sich die Positionen um. Auch mit dieser merklich aufwendigeren Anordnung ist eine Reinigung des gesamten Fensters nicht zu erzielen.

Bei der bekannten Wischervorrichtung wird das jeweils in Bewegungsrichtung vor dem Wischerblatt befindliche Wasser verdrängt, während nach der Bewegungsumkehr ein Teil davon als Film zurückgeführt wird. Da das Wischerblatt ununterbrochen mit dem Fenster in Berührung bleibt, werden gut haftende, schwer lösliche Schmutzpartikel nicht in einem Hub sicher entfernt, sondern hin- und herbewegt. Dies gilt auch für nassen Schnee. Besonders ungünstig wirkt sich dieses Prinzip bei Schneefall aus, wo immer wieder Schnee zurück auf die Scheibe transportiert wird, der vorher in beiden Endstellungen zusammengeschoben worden ist. Bei kaltem Wetter behindern die vereisten Schneereste die Wischerbewegung noch zusätzlich und können zum Versagen der Vorrichtung führen.

Die Aufgabe der Erfindung besteht in der Schaffung einer Wischervorrichtung zur ganzflächigen Reinigung von rechteckförmigen Fenstern bei optimaler Reinigungswirkung.

Die Lösung der Aufgabe erfolgt mit einer Wischervorrichtung zur Verwendung an einem Fenster des Schutzgehäuses einer Videokamera, bei der wenigstens ein an einem Wischerträger angebrachtes Wischerblatt mit Hilfe eines eine Translationsbewegung erzeugenden, von einem elektromotorischen Antrieb betätigten Mechanismus einen Wischhub entlang der Außenseite des Fensters und einen Rückhub in einem Abstand zum Fenster ausführt.

In den Unteransprüchen sind vorteilhafte Weiterbildungen der Erfindung angegeben.

Die Erfindung beruht auf dem Gedanken, das Wischerblatt in einer Translationsbewegung im wesentlichen senkrecht zu seiner Längsachse hin und her zu bewegen, wobei ein Motorantrieb die erforderlichen Bewegungsabläufe mit Hilfe eines geeigneten Mechanismus überträgt. Von einem solchen Mechanismus wird die Durchführung des Wisch- und des Rückhubes sowie die Einstellung der dabei jeweils erforderlichen Lage des Wischerblattes gefordert. Letzteres muß während des gesamten Wischhubes unter gleichmäßiger Kraft an der Außenseite des Fensters anlegen und während des Rückhubes mit Sicherheit einen Abstand dazu einhalten.

Unter Verwendung eines geeigneten Mechanismus gelingt mit der erfindungsgemäßen Vorrichtung die Reinigung einer rechteckigen Fläche des Fensters, wobei größere und stärker haftende Schmutzspritzer oder Schneereste infolge der nur in einer Richtung erfolgenden Wischbewegung und der gleichmäßigen Andrückkraft an das Fenster während des ganzen Hubes nach wenigen Hüben sicher entfernt werden.

Als für die Wischervorrichtung geeigneter Mechanismus ist ein Zugmittelantrieb vorgesehen, insbesondere, wenn als Zugmittel eine endlose, an den Hubenden über Kettenräder geführte Gliederkette zum Einsatz kommt, mit der eine fomschlüssige schlupffreie Bewegungsübertragung auf den an zwei benachbarten Gelenkpunkten befestigten Wischerträger durchführbar ist. Mit der umlaufenden Gliederkette wird das Wischerblatt sicher entlang des Fensters geführt und erlangt nach der Umlenkung am Kettenrad ohne sonstige Steuermittel einen großen Abstand zum Fenster.

Zugmittelgetriebe lassen sich auch bei vergleichweise großen Wischhüben einsetzen.

In solchen Anwendungsfällen sind jedoch zusätzliche Maßnahmen zur Konstanthaltung der Andrückkraft des Wischerblattes an das Fenster erforderlich.

Dazu kann das Zugmittel über frei drehbare Zwischenräder derselben Größe wie die an den Umlenkpunkten eingesetzten Räder geführt werden. Auch am Rahmen angebrachte, das Zugmittel über den ganzen Wischhub abstützende, ortsfeste Führungsschienen, lassen sich mit Erfolg einsetzen.

Die Ausstattung der Wischervorrichtung mit zwei oder mehr an dem Zugmittel befestigten Wischerblättern ermöglicht in einfacher Weise eine Verkürzung der Reinigungsdauer und eine Erhöhung der Reinigungswirkung. Die Anordnung der Wischerblätter ist dabei so zu treffen, daß das Fenster bei abgeschaltetem Antrieb freie Sicht für die Videokamera offenhält.

Nach einer anderen Weiterbildung des Erfindungsgedankens ist die Führung des Wischerträgers in einer parallel zur Außenfläche des Fensters angeordneten Kulisse vorgesehen, mit der unabhänig von den Abmessungen des Fensters eine gleichmäßige Andrückkraft während des gesamten Wischhubes erzeugt wird. Die Hin- und Herbewegung des Wischerträgers wird dabei von einem an sich bekannten Schubkurbelgetriebe übertragen. Die den Wischerträger abschließende Walze dient nicht nur zur Führung während der Hubbewegungen, sondern vermittelt mit Hilfe eines exzentrisch angeordneten Bolzens die Umsteuerung des Wischerblattes von der Arbeits- in die Ruhestellung. Die Umsteuerung wird dabei in einfachster Weise mit Hilfe eines Überhubes der Koppelstange des Schubkurbelgetriebes betätigt. Aufgrund der kinematischen Eigenschaften der Schubkurbelgetriebe eigenen sich die mit der Kulisse ausgerüsteten Mechanismen besonders für Anwendungsfälle mit langen Stillstandspausen und/oder umgebungsbedingter starker Verschmutzung der bewegten Teile wegen der beim Anlauf aus einer Totpunktstellung besonders großen Übertragungskräfte der Koppelstange.

Zum besseren Verständnis wird die Erfindung anhand von Zeichnungen näher beschrieben, die nachfolgend aufzeigen:
- Figur 1: Gesamtansicht einer Videokamera mit Schutzgehäuse;
- Figur 2: Ansicht des Gerätes nach Figur 1 mit einer von einem Riemen-Antrieb betätigten Wischervorrichtung;
- Figur 3: Querschnitt zur Figur 2;
- Figur 4: Querschnitt eines Gerätes mit einer von einer Schubkurbel betätigten Wischervorrichtung mit exzentrischer Betätigung;
- Figur 5: Ansicht eines Gerätes nach Figur 4;
- Figur 6: Ausschnitt aus Figur 4 mit Darstellung der Walze;
- Figur 7: Ausschnitt aus Figur 4 mit Darstellung der Raste;
- Figur 8a-8d: Vereinfachte Darstellung des Bewegungsablaufes eines Gerätes mit einer von einer Schubkurbel betätigten Wischervorrichtung mit einem Gabelstück.

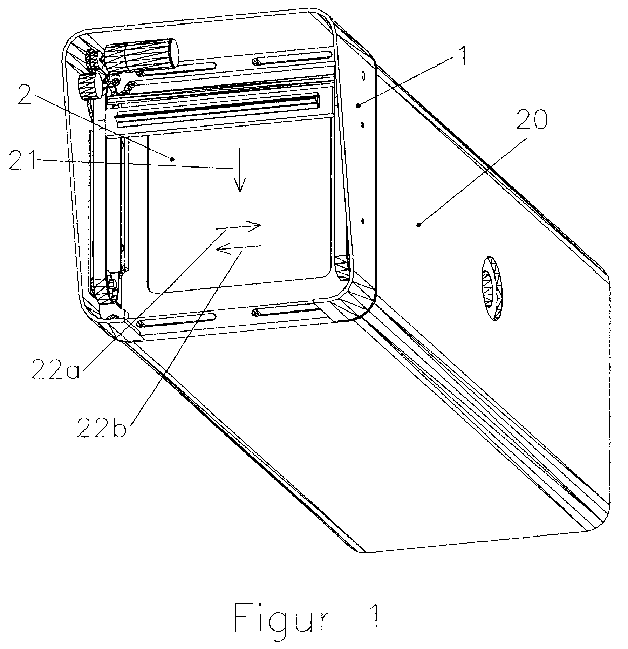

Die erfindungsgemäße Wischervorrichtung ist nach Figur 1 an einem die Videokamera umschließenden Schutzgehäuse 20 angebracht, das an seiner Vorderseite mit einem Fenster 2 abschlossen ist, durch das die Aufzeichnungen der Videokamera vorgenommen werden. Zum Schutz gegen direkte Witterungseinflüsse ist das Fenster 2 durch einen Rahmen 1 abgedeckt. Die darüber hinaus die Lichtdurchlässigkeit des Fensters 2 beeinträchtigenden Niederschläge und Verschmutzungen werden mit Hilfe der Wischervorrichtung entfernt, wobei diese ein Wischerblatt 10 a vorsieht, dessen Wischhub nach Figur 1 vorzugsweise in vertikaler Bewegungsrichtung 21 von oben nach unten erfolgt. Wenn bestimmte Betriebsbedingungen dies erfordern, läßt sich auch eine Anordnung mit horizontaler Bewegungseinrichtung von links nach rechts 22 a oder von rechts nach links 22 b realisieren.

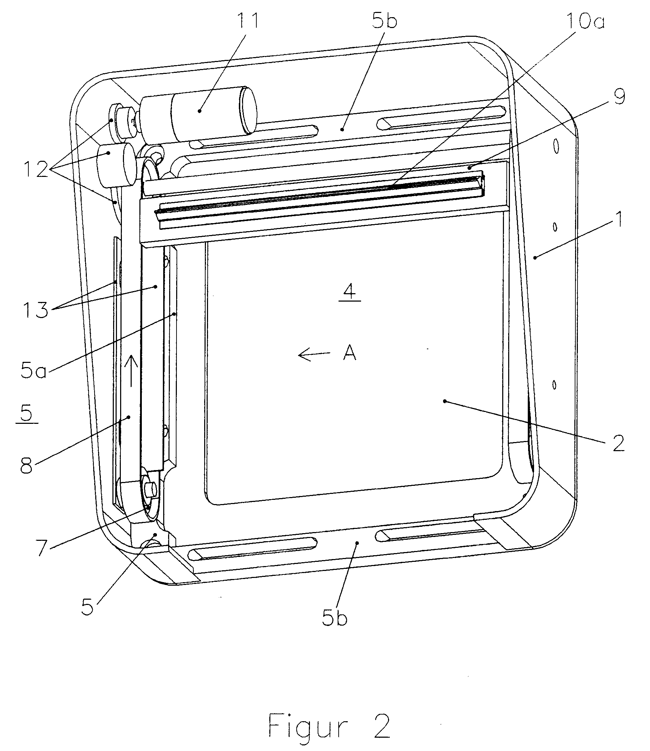

Die in Figur 2 dargestellte Ansicht zeigt einen Rahmen 1, der als Formteil beispielsweise aus Metall oder einem geeigneten Kunststoff hergestellt ist und in der Mitte ein durch eine Glasscheibe gebildetes Fenster 2 aufnimmt. Der Rahmen 1 schließt nach Figur 1 das Gehäuse 20 an der Vorderseite ab. Hinter dem Fenster 2 befindet sich eine nicht dargestellte Video-Überwachungskamera, deren Optik auf das Fenster 2 ausgerichtet ist. An der Vorderseite weist der Rahmen 1 einen oben und seitlich überstehenden Rand auf, der u.a. auch einen gewissen, dachartigen Wetter-Schutz sowie einen Schutz gegen Blendlicht usw. bildet. Innerhalb des vom Rand umschlossenen Raumes ist eine Wischervorrichtung 4 für das Fenster 2 vorgesehen.

Diese Wischervorrichtung 4 besteht aus einem Träger 5, der bei der dargestellten Ausführungsform als quadratischer oder rechteckförmiger Rahmen mit vier Schenkeln ausgeführt ist, und zwar mit den beiden parallelen Schenkeln 5 a und den beiden dazu im rechten Winkel angeordneten ebenfalls parallelen Schenkeln 5 b.

Der Träger 5 ist an der Außenseite des Rahmens 1 derart befestigt, daß die beiden Schenkel 5 a seitlich vom Fenster 2, und zwar jeweils an einer vertikalen Seite dieses Fensters und die Schenke 5 b oberhalb und unterhalb des Fensters auf der dieses Fenster umschließenden flachen Fläche des Rahmens 1 aufliegen und dort in geeigneter Weise, beispielsweise durch Schrauben usw., befestigt sind.

Beide Schenkel 5 a sind jeweils in einem Teilbereich als Winkelstück ausgeführt. An den Schenkeln des Winkels sind an beiden Seiten des Fensters 2 jeweils zwei Riemenscheiben 7 drehbar gelagert, und zwar mit ihren Achsen parallel zu den Verbindungsschenkeln 5 b. Um die beiden Riemenscheiben 7 jedes Schenkels 5 b ist ein in sich geschlossener Riemen 8 geführt. Zwischen den beiden Riemen 8 ist beidendig ein Wischerträger 9 gehalten, der an einer Seite ein Wischerblatt 10 a trägt.

Jeder Riemen 8 bildet eine Schlaufe, die zwei parallel zur Ebene des Fensters 2 liegende Längen besitzt, und zwar eine erste Länge in einem geringen Abstand und eine zweite Länge in einem größeren Abstand von dieser Ebene. Bei umlaufenden Riemen 8 führt das Wischerblatt 10 a bzw. der Wischerträger 9 jeweils einen Wischhub aus, bei dem sich der Wischerträger 9 auf der ersten Länge der Schlaufen der Riemen 8 bewegt. Daran anschließend folgt ein Rückhub, bei dem sich der Wischerträger 9 auf der zweiten Länge der Schlaufen der Riemen 8 bewegt.

Bevorzugt werden die Riemen 8 so angetrieben, daß der Wischhub von oben nach unten erfolgt. Am Übergang zwischen dem Wischhub und dem Rückhub und umgekehrt bewegen sich die Enden des Wischerträgers 9 jeweils um die Riemenräder 7.

Zum Antrieb ist ein Elektromotor 11 vorgesehen, der beispielsweise ein internes Getriebe aufweist und bei der dargestellten Ausführungsform über ein zusätzliches externes Getriebe 12 die eine der oberen Riemenscheiben 7 antreibt. Bei der dargestellten Ausführungsform ist nur ein Riemen 8 durch den Elektromotor 11 angetrieben. Grundsätzlich besteht die Möglichkeit, beide Riemen 8 durch den Elektromotor anzutreiben, wobei hierfür beispielsweise die oberen Riemenscheiben 7 auf einer gemeinsamen Welle sitzen.

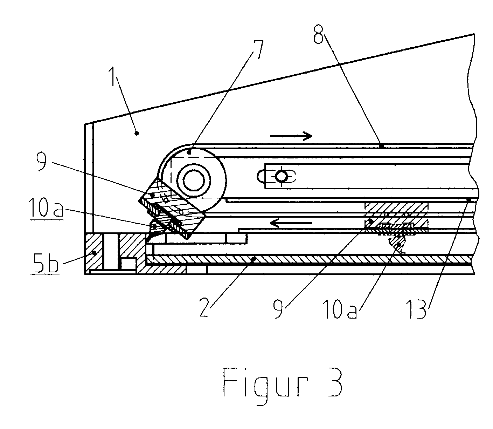

Anstelle von Riemen mit den zugehörigen Riemenscheiben lassen sich als Zugmittel u.a. auch Gliederketten, deren Bewegung formschlüssig mit Kettenrädern übertragen wird, sehr vorteilhaft als Antrieb des Wischerblattes 10 a einsetzen. Die Befestigung des Wischerträgers 9 wird dann am besten an jeder Seite an zwei benachbarten Gelenkstellen vorgenommen. Bei vergleichweise großen Achsabständen zwischen den Kettenrädern ist es vorteilhaft, das Wischerblatt 10 a während des gesamten Wischhubes gemäß Figur 3 mit einem Führungsblech 13 zwangsläufig zur Anlage an das Fenster 2 zu bringen. Zur Reduzierung von Reibungskräften können auch lose drehbare Rollen oder Walzen diese Aufgabe übernehmen.

Nach einer weiteren Verbesserung kann nach Figur 3 das Wischerblatt 10 a nach Beeindigung des Wischhubes so an dem nächstliegenden Schenkel 5 b des Trägers 5 vorbeigeführt werden, daß ein Abstreifen von Schmutzteilen und Wassertropfen erfolgt.

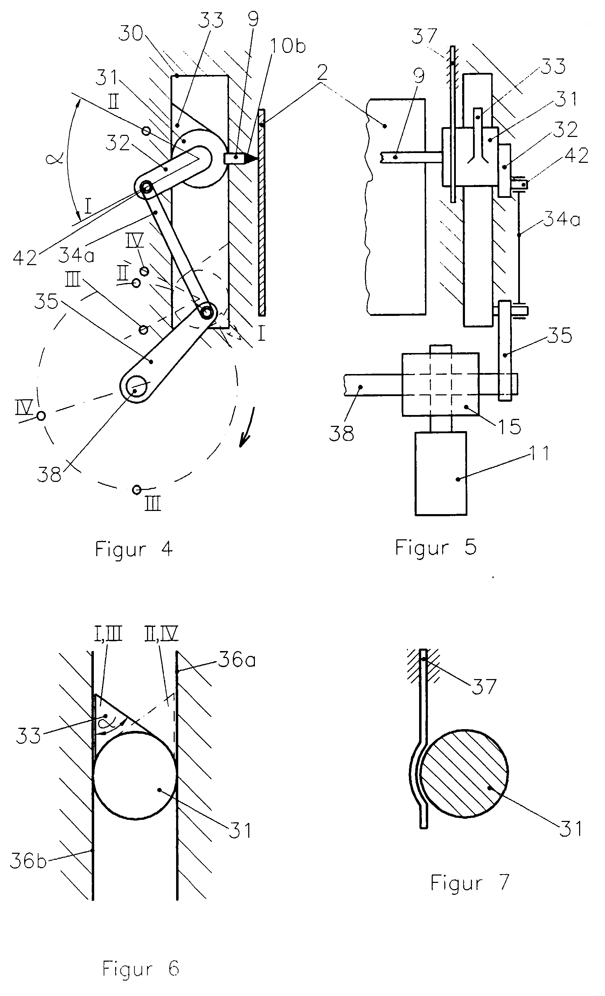

Eine zweite vorteilhafte Ausführung der Wischervorrichtung im Rahmen des Erfindungsgedankens ist schematisch in den Figuren 4 und 5 angegeben. Der Wischerträger 9 ist dabei mit Hilfe einer mit diesem drehfest verbundenen Walze 31 in einer Kulisse 30 geführt. Mit der Walze 31 ist außerdem ein Exzenter oder eine Kurbel 32 verbunden, an die die Koppelstange 34 a eines Schubkurbeltriebes angelenkt ist.

Letztere wird von der durch den Elektromotor 11 mit dem Getriebe 15 in Umlauf versetzten Kurbel 35 betätigt. Die Kurbel 32 durchläuft während eines Wischvorganges gemaß Figur 4 die Stellungen von I, II, III und IV. In den Stellungen I und III sowie auf dem Weg von I nach III befindet sich das Wischerblatt 10 b in seiner Arbeitsstellung, in der es den Wischhub ausführt. In der unteren Endstellung erfolgt bei weiterdrehender Kurbel 35 eine Umschaltung des Wischerblattes 10 b von der Stellung III in die Stellung IV, wo es seine Ruhestellung erreicht. Es schließt sich bei weiterer Drehung der Kurbel 35 der Rückhub an, dem in der oberen Endstellung die Umschaltung von der Stellung II in die Stellung I folgt. Damit ist mit der abermaligen Erreichung der Arbeitsstellung des Wischerblatters 10 b gemäß Figur 4 ein vollständiger Umlauf beendet. Um den beschriebenen Ablauf durchführen zu können, ist die Walze 31 nach Figur 6 mit einem Anschlag 33 versehen, der die Umschaltungen am Wischerträger 9 durch dessen Anlage an jeweils einer der beiden Führungskanten 36 a, 36 b begrenzt und die Stellung des Wischerblattes 10 b sowohl beim Wischhub als auch beim Rückhub sicherstellt. Die Figur 6 zeigt darüber hinaus die Zuordnung der beiden Führungskanten 36 a, 36 b zu den Stellungen I bis IV des Wischerblattes 10b. Mit dem von Seitenflächen des Anschlages 33 eingeschlossenen Winkel α ist der Bereich der Umschaltungen festgelegt.

Eine nach Figur 7 angegebene Raste 37 stellt sicher, daß der Wischerträger 9 während der Umschaltung aus der Stellung II in die Stellung I in der oberen Endlage bleibt. Eine analoge Raste ist auch für die untere Endlage des Wischerträgers 9 vorgesehen. Während eines Wischvorganges werden die Rasten 37 kurz nach dem Durchlauf der Kurbel 35 durch die Stellung I bzw. IV mit Hilfe der Kraft des Schubkurbelgetriebes überwunden.

Die Kulisse 30 ist in den Träger eingearbeitet oder als Formteil angeschraubt. Um eine sichere Führung der Wischervorrichtung auch bei längeren Wischerblättern zu gewährleisten, empfiehlt es sich, die Kulissenführung an beiden Seiten des Fensters 2 anzubringen. Der beidseitige Antrieb des Wischerträgers 9 erfolgt dabei von dem Motor 11 über das Getriebe 15 und die durchlaufende Welle 38 vollkommen synchron. Zur Bewegungsübertragung eignen sich vorzugsweise Schneckengetriebe, die gleichzeitig die Festlegung der für den Wischvorgang erforderlichen Arbeitsgeschwindigkeit ermöglichen. Der Einsatz anderer Rädergetriebe ist ebenfalls möglich.

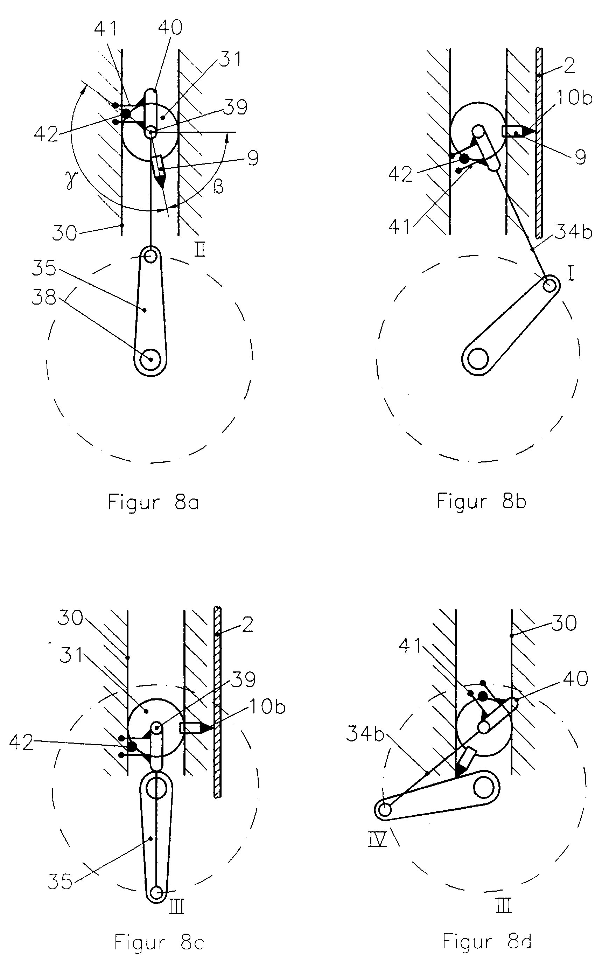

Wischervorrichtungen mit einer Kulisse 30 als Führung des Wischerblattes 10 b lassen sich auch mit einem vereinfachten Schubkurbeltrieb betätigen, dessen charakteristischen Stellungen in vereinfachter Darstellung in den Figuren 8 a bis 8 d angegeben sind. Der sonstige Aufbau dieser Ausführung entspricht den Figuren 4 und 5. Die Koppelstange 34 b greift an dem die Walze 31 in konzentrischer Anordnung verlängernden Zapfen 39 mit einem Langloch 40 an (Figur 8 a). Mit der Walze 31 ist wiederum an der anderen Seite der Wischerträger 9 und das Wischerblatt 10 b verbunden (Figur 8 b). Zur Umschaltung des Wischerblattes 10 b wird bei dieser Konstruktion der durch die Länge des Langloches 40 bei stillstehender Walze 31 entstehende Überhub der Koppelstange 34 b in den beiden Endstellungen genutzt. Zu diesem Zweck ist am Langloch 40 seitlich das Gabelstück 41 vorgesehen, das mit dem exzentrisch an der Walze 31 angebrachten Bolzen 42 zusammenwirkt.

Eine solche Umschaltung ist zwischen den Figuren 8 a und 8 b sowie zwischen den Figuren 8 c und 8 d angegeben. Zwischen der Anbringung des Wischerträgers 9 und des Bolzens 42 an der Walze 31 ist ein unveränderlicher Winkel γ vorgesehen. Da in der Ruhestellung des Wischerblattes 10 b zwischen diesem und dem Fenster 2 ein ausreichender Abstand einzuhalten ist, ist wie in der Ausführung nach den Figuren 4 bis 6 ein Mindestwinkel β erforderlich. Die Länge des Langloches 40 wird durch die Größe des Radius zwischen dem Bolzen 42 und der Drehachse der Walze 31 bestimmt.

Wie bei der vorher beschriebenen Ausführung ist auch hier in jeder Endstellung eine nicht dargestellte Raste (siehe Figur 7) erforderlich. Der Ablauf eines vollständigen Wischvorganges wird durch eine volle Umdrehung der Kurbel 35 gesteuert. Sie beginnt gemäß Figur 8 a mit der Ruhestellung des Wischerblattes 10 b im oberen Totpunkt der Kurbel 35 (Stellung II). Bei der Drehung bis zur Stellung I nach Figur 8 b erfolgt die Umschaltung des Wischerblattes 10 b in die Arbeitsstellung. Während dieses Vorganges findet infolge der Wirkung der Raste 37 keine translatorische Bewegung der Walze 31 statt. Auf dem weiteren Weg in die Stellung III (Figur 8 c) findet der Wischhub statt, seine Länge wird durch den Radius der Kurbel 35 abzüglich der Länge des Langloches 40 bestimmt. Beim Weiterdrehen in die Stellung IV nach Figur 8 d erfolgt bei stillstehender Walze 31 die Umschaltung in die Ruhestellung des Wischerblattes 10 b, in der auf dem weiteren Weg in die Stellung II der Rückhub stattfindet.

Bezüglich der Auslegung und der Ausführung des elektromotorischen Antriebes wird auf die Figur 5 und die zugehörige Beschreibung verwiesen.

Die Wischervorrichtung wird entweder im Bedarfsfall willkürlich zugeschaltet oder im Rahmen einer Programmsteuerung, z.B. in Intervallen eingesetzt. Dabei ist es sinnvoll die Wischhübe mit den Aufnahmezeiten der Videokamera abzustimmen.

## Patentansprüche

1. Wischervorrichtung zur Verwendung an einem Fenster (2) des Schutsgehäuses einer Videokamera,
dadurch gekennzeichnet,
daß wenigstens ein an einem Wischerträger (9) angebrachtes Wischerblatt (10 a, 10 b) mit Hilfe eines eine Translationsbewegung erzeugenden, von einem Antrieb betätigten Mechanismus einen Wischhub entlang der Außenseite des Fensters (2) und einen Rückhub in einem Abstand zum Fenster (2) ausführt.

2. Wischervorrichtung nach Patentanspruch 1,
dadurch gekennzeichnet,
daß ein Zugmittelgetriebe mit einem in sich geschlossenen, ketten- oder bandartigen, über zwei Umlenkrollen oder Räder (7) geführten Zugmittel (8) die Bewegung auf den an dem Zugmittel (8) befestigten Wischerträger (9) überträgt, der dabei in einer ersten Ebene den Wischub und in einer zweiten Ebene den Rückhub ausführt.

3. Wischervorrichtung nach Patentanspruch 1,
dadurch gekennzeichnet,
daß ein Zugmittelgetriebe mit einem in sich geschlossenen, ketten- oder bandartigen, über zwei Umlenkrollen oder Räder (7) geführten Zugmittel (8) die Bewegung auf zwei oder mehrere an dem Zugmittel (8) befestigte Wischerträger (9) überträgt, von denen jedes in einer ersten Ebene den Wischhub und in einer zweiten Ebene den Rückhub ausführt.

4. Wischervorrichtung nach Patentanspruch 2 oder 3,
dadurch gekennzeichnet,
daß als Zugmittel eine über zwei Kettenräder geführte Gliederkette vorgesehen ist, an der jeder der Wischerträger (9) an zwei benachbarten Gelenkpunkten befestigt ist.

5. Wischervorrichtung nach Patentanspruch 2, 3, 4,
dadurch gekennzeichnet,
daß das ketten- oder bandartige Zugmittel (8) zwischen den Umlenkrollen auf weiteren Rollen oder Rädern geführt ist.

6. Wischervorrichtung nach Patentanspruch 2, 3, 4,
dadurch gekennzeichnet,
daß das ketten- oder bandartige Zugmittel (8) auf einer Seite des Fensters (2) mit einem Führungsblech (13) abgestützt ist.

7. Wischervorrichtung nach einem der vorstehenden Patentansprüche,
gekennzeichnet durch einen Elektromotor (11) zum Antrieb wenigstens einer der Umlenkrollen oder Räder (7).

8. Wischervorrichtung nach einem der Patentansprüche 2 bis 6,
dadurch gekennzeichnet,
daß zwei durch eine Welle miteinander verbundene, von einem Elektromotor (11) gemeinsam angetriebene Zugmittelgetriebe die Bewegung beidseitig auf den/die Wischerträger (9) übertragen.

9. Wischervorrichtung nach Patentanspruch 1,
dadurch gekennzeichnet,
daß eine parallel zur Außenseite des Fensters (2) angeordnete Kulisse (30) den Wischerträger (9) führt, der mit Hilfe eines aus einer umlaufenden Kurbel (35) und einer Koppelstange (34 a, 34 b) bestehenden Schubkurbelgetriebes in der einen Richtung den Wischhub und in der entgegengesetzten Richtung den Rückhub sowie in den beiden Endstellungen jeweils eine Umschaltung des Wischerblattes (10 a, 10 b) von der Arbeitsstellung in die Ruhestellung und umgekehrt ausführt.

10. Wischervorrichtung nach Patentanspruch 9,
dadurch gekennzeichnet,
daß der Wischerträger (9) in der Kulisse (30) von einer Walze (31) geführt ist, an der die Koppelstange (34a, 34 b) angreift und die mit einem die Umschaltungen übertragenden, exzentrisch angeordneten Bolzen (42) ausgestattet ist.

11. Wischervorrichtung nach Patenanspruch 10,
dadurch gekennzeichnet,
daß die Koppelstange (34 a) an dem exzentrisch angeordneten Bolzen (42) angreift und ein an der Walze (31) angearbeiteter Anschlag (33) einen die Umschaltbewegungen begrenzenden Winkel (α) bestimmt.

12. Wischervorrichtung nach Patentanspruch 10,
dadurch gekennzeichnet,
daß ein die Koppelstange (34b) verlängerndes Langloch (40) an einem konzentrisch an der Walze (31) verbundenen Zapfen (39) angreift und ein seitlich an dem Langloch (40) befestigtes, den exzentrisch angeordneten Bolzen (42) umgreifendes Gabelstück (41) die Umschaltungen überträgt und deren Endstellungen begrenzt.

13. Wischervorrichtung nach einem der Patentansprüche 10, 11 oder 12,
dadurch gekennzeichnet,
daß eine den Wischerträger (9) während der Umschaltungen in einer der beiden Endstellungen haltende Raste (37) vorgesehen ist.

14. Wischervorrichtung nach einem der Patentansprüche 9 bis 12,
dadurch gekennzeichnet,
daß der Wischerträger (9) beidseitig in je einer Kulisse (30) geführt und von je einem Schubkurbelgetriebe bewegt ist.

15. Wischervorrichtung nach Patentanspruch 14,
dadurch gekennzeichnet,
daß ein Elektromotor (11) über ein Getriebe, vorzugsweise ein Schneckengetriebe (15), mit einer durchgehenden Welle (38) beide Schubkurbelgetriebe synchron antreibt.

16. Wischervorrichtung nach einem der vorstehenden Patentansprüche,
dadurch gekennzeichnet,
daß die Wischervorrichtung als an einem Tragrahmen oder Träger (5) befestigte funktionsfähige Baueinheit ausgebildet ist.
